# EUROPEAN PATENT SPECIFICATION

(11) **EP 1 296 845 B1**
(45) Date of publication and mention of the grant of the patent: **04.10.2006**
(21) Application number: 01964998.7
(22) Date of filing: 14.06.2001
(51) Int. Cl.: B60J 10/00

(54) **GLAZING PANEL**
GLASSCHEIBE
PANNEAU DE VERRE

(30) Priority: 14.06.2000 EP 00202067
(43) Date of publication of application: 02.04.2003
(73) Proprietor: GLAVERBEL, 1170 Bruxelles (BE)
(72) Inventor: MOONEN, François, B-6040 Jumet (BE)
(74) Representative: Farmer, Guy Dominic
(86) International application number: PCT/EP2001/006866
(87) International publication number: WO 2001/096134

(56) References cited:
- DE-A- 3 629 343
- DE-A- 19 837 348
- DE-C- 19 632 149
- US-A- 5 350 211
- PATENT ABSTRACTS OF JAPAN vol. 018, no. 422 (M-1651), 8 August 1994 (1994-08-08) -& JP 06 126841 A (INOAC CORP), 10 May 1994 (1994-05-10)

## Description

This invention relates to glazing panels and particularly, but not exclusively to glazing panels provided with profile strips which are adapted to be fitted into vehicles, particularly automotive vehicles.

The invention will be particularly described in relation to vehicle windscreens and rear screens. Nevertheless, it is equally applicable to other forms of glazing, for example vehicle side windows and sunroofs and to architectural glazing. The invention may be used in relation to laminated or monolithic glazings or in relation to composite glazings or plastics glazings.

Profile strips used, for example, to form a seal against the bodywork of a vehicle, may be provided at one or more edges of a glazing by injection moulding or by extrusion. Injection moulding allows great freedom in the shape of profile produced but requires significant tooling investment for each model of glazing. Extruded profile strips attached to the glazing panel using a robot require less tooling investment but present a number of difficulties; these include joining the two ends of an extruded profile together when a continuous peripheral profile is desired and forming sharp corners at the corner sections of the glazings without deforming the desired form of the profile.

Corner sections of a glazing panel having an extruded profile can be post-formed by injection moulding. However, this is disadvantageous in terms of cycle times, requires investment in injection moulding equipment, carries the risk of breaking the glazing due to the injection moulding process and generally requires manual finishing of the injection moulded portion to remove flash. Joining two ends of a profile strip by injection moulding has similar drawbacks. Some of the described methods are disclosed in DE 19632149 C. It is an object of the invention to improve the known methods.

According to one aspect, the present invention provides a method of manufacturing a glazing panel as defined in claim 1.

The thermoplastics material may be homogeneous or it may be a composite material. A PVC may be used. A thermoplastic elastomer (TPE) is particularly preferred, especially for portions formed by extrusion. Different materials and/or different compositions of similar materials may be used for the profile and the completion section. The fusion of the materials requires at least partial melting or softening at interfaces between the completion section and the profile so as to form a substantially continuous join.

The fusing of the pre-formed completion section to the profile is preferably carried out at the glazing panel subsequent to securing the profile to the glazing. The fusing may be achieved by heating interfaces to be fused, for example, by direct contact or using a heating fluid, and subsequently contacting such interfaces together.

The clamping of the completion section and of the portion of the profile to which it is intended to be attached may be achieved manually. Preferably, the clamping is achieved in a press have a form that encourages the desired configuration of the profile; the press may have substantially the shape of the completion section and of the portion of the profile to which it is intended to be attached. The press may be heated; it may be provided with means for heating the interface between the completion section and the profile; additionally or alternatively, separate heating means may be provided for this purpose. Contact or non-contact heating means may be used.

The additional, intermediary fusion portion may be of the same or of a different material or composition to the profile and completion section. The additional, intermediary fusion portion may be placed at an interstice between the profile and completion section prior to the clamping. Alternatively, the additional, intermediary fusion portion may be positioned at an interface of the profile at the glazing prior to positioning and clamping of the completion section.

Preparation of the profile by cutting the profile to form an interface adapted to be attached to the completion section may be achieved using a cutting implement comprising a blade or a wire. The cutting implement may be heated. A positioning jig may be used to facilitate accurate positioning of the portion of the profile to be cut. A jig may be used to facilitate marking of the portion of the profile for subsequent manual cutting.

The completion section may be formed by moulding, particularly injection moulding or it may be formed by pressing, for example between parts of a heated mould.

According to further aspects, the present invention provides for use of a method as defined in claim 13 to form a sharp cornered profile for an automotive glazing panel and for an automotive glazing panel as defined in claim 14.

Embodiments of the invention will now be described, by way of example only, with reference to the accompanying drawings of which:
- Fig 1: is a plan view of a glazing panel after a first manufacturing step;
- Fig 2: is a plan view of a glazing panel after a second manufacturing step;
- Fig 3: is a plan view of a completed glazing panel;
- Fig 4: is an exploded perspective view of a corner portion of a glazing panel;
- Fig 5: is a schematic side view of a glazing panel;
- Fig 6: is a schematic side view of an alternative glazing panel.

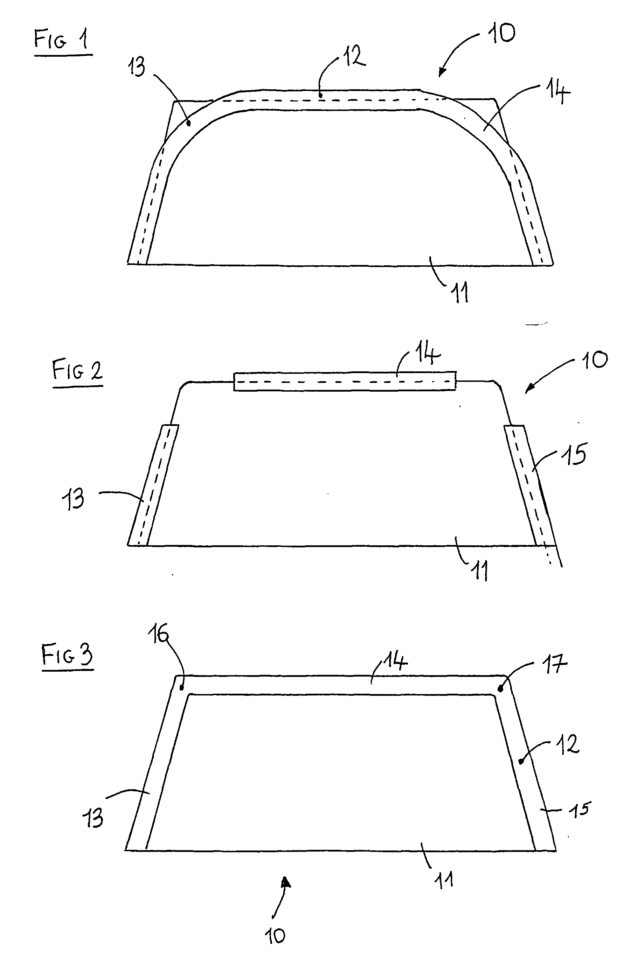

Glazing panel 10 is an automotive rear screen having a thermoplastics profile 12 positioned at three of the peripheral edges of a four-sided glazing 11. As illustrated in Fig 1, the profile 12 is extruded from an extrusion nozzle and placed around the peripheral edges of the glazing 11 as a continuous strip. Fig 1 illustrates, greatly exaggerated for clarity, that corner sections 13, 14 of the extruded profile strip 12 form a radius connecting rectilinear portions of the profile strip. The minimum radius that may be achieved will depend upon the cross-section and configuration of the profile strip and the method used to form and position the profile strip 12.

Fig 2 shows corner sections of the profile strip 12 having been cut away and removed from the glazing 11 so as to leave three substantially rectilinear portions 13,14,15. If the glazing 11 is treated, for example with a primer, to facilitate adhesion of the profile strip 12 to the glazing, it may be desirable not to treat the portions of the glazing from which the profile strip 12 is intended to be removed, or to treat these portions in some other way

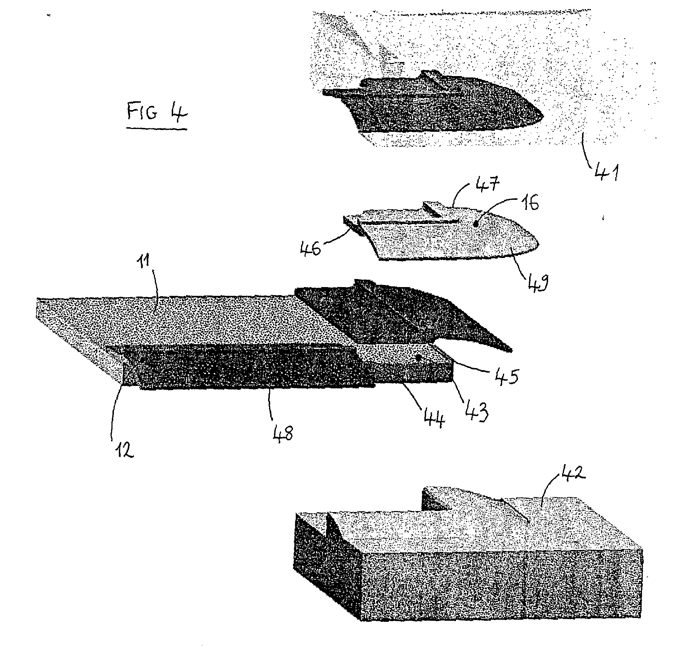

As illustrated in Fig 3, first 13 and second 14 rectilinear profile strips portions are subsequently joined together at the glazing 11 by fusion with a completion section 16 which forms one corner section. Second 14 and third 15 rectilinear portions are subsequently joined together by fusion with completion section 17 which forms another corner section. Adhesion of the completion sections 16,17 to the glazing 11 may be enhanced by use of a primer or by some other treatment. Corner sections 16,17 have sharper corners than that that could be achieved by positioning a single, continuous extrusion strip on the glazing.

Each corner of the glazing panel 10 may be processed separately and sequentially or each may be processed at the same time. Preferably, the processing involved in fusing the completion sections 16,17 to their respective portions of the profile is carried out just after the thermoplastics profile strip 12 has been extruded and positioned at the glazing 11 so that the profile strip is still above room temperature and thus requires less additional heating to cause its fusion.

Fig 4 shows first 41 and second 42 halves of a press used to process a corner section. Once a portion of the profile strip 12 has been removed to leave a free corner 43 at the glazing 11, pre-formed completion section 16 is placed in first press half 41, interfaces 44,45,46,47 of the profile strip 12 and corner section 16 are heated using hot air to cause them to at least partially melt or become tacky or fusionable. The first and second halves of the press are then closed around the glazing 11 so as to position and contact the completion corner section with the profile strip 12 and to cause the interfaces 44,45,46,47 to fuse together. Lip portions 48, 49 of the profile strip 12 and of the corner section 16 are also fused together at their respective interfaces. Heated air is also used to heat the surface of the completion section that will contact the glazing 11 so as to facilitate secure adhesion to the glazing. The surface of the glazing may likewise be heated.

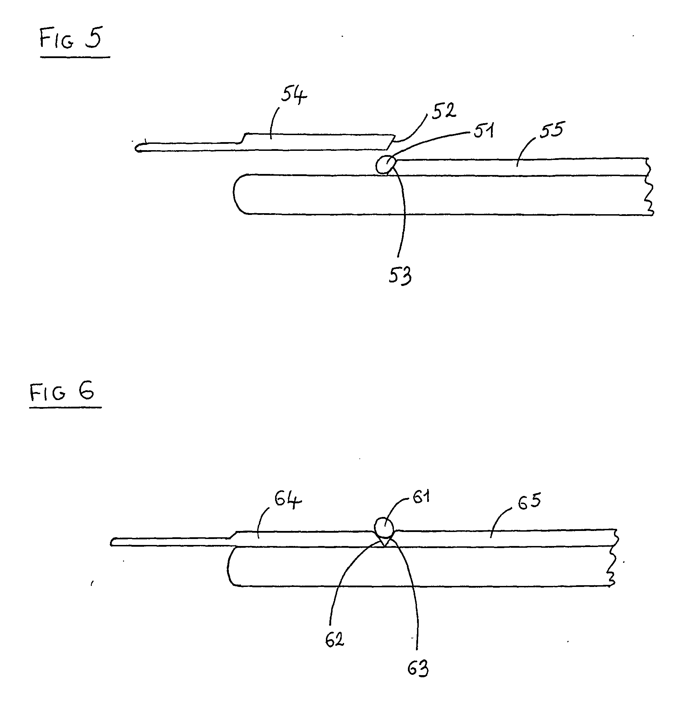

Fig 5 shows use of a separate fusion portion 51 used to fuse together interfaces 52,53 of a completion section 54 and a profile strip 55. The interfaces and the fusion portion 51 are heated prior to pressing the pieces together so as to cause fusion between the completion section 54 and the fusion section 51 and between the fusion section 51 and the profile strip 55. The fusion portion 51 may take the form of a strip or roll of material; it may be extruded, for example, extruded directly into position.

Fig 6 shows use of a fusion portion 61 to fuse interfaces 62, 63 of completion section 64 and profile strip 65 and, in addition to complete a space or gap initially left between the completion section 64 and profile strip 65. The same press may be used both to position the completion section 64 at the surface of the glazing 11 and to subsequently press and form the subsequently positioned intermediary fusion portion 61.

Use of direct fusion between the completion portion and the profile may substantially avoid the creation of flash and avoid the need for subsequent trimming. Nevertheless, the press may be adapted to remove any flash.

It is advantageous to ensure that the interface between the completion section and the profile which is positioned at the surface of the glazing is entirely fused; this creates a good looking join when viewed through the glazing, for example, from the exterior of a vehicle in which the glazing is secured.

Whilst the illustrated embodiments comprise removal of a portion of the profile to allow subsequent attachment of a completion section, it may be possible to fuse the completion section to a continuous profile, without removal of any part thereof, for example attaching the completion portion to form an attachment to and extension of the existing lip projecting beyond the edge of the glazing.

The sharp corner created by the present invention may facilitate close fitting of the glazing into a frame, for example, a frame provided as part of the bodywork of a vehicle. This may be particularly desirable when the glazing panel 10 is to be flush fitting with a surrounding frame in which it is assembled.

The profile may be deposited on a band, for example a band of black or opaque enamel, carried on a surface of the glazing rather than being deposited directly on to the glazing.

A similar method may be used to join two ends of a profile, for example, to form a continuos profile around the entire periphery of a glazing panel.

## Claims

1. A method of manufacturing a glazing panel which comprises a profile secured at a portion of at least one edge of a glazing (11) comprising the steps of:
a) securing a profile (13,14,15) comprising a thermoplastics material at at least part of a peripheral edge of the glazing; **characterised by**:
b) fusing a pre-formed completion section (16,17) comprising a thermoplastics material to a portion of the profile to form a substantially continuous joint between them.

2. A method in accordance with claim 1, comprising:
c) clamping together the completion section and the portion of the profile to which is to be attached.

3. A method in accordance with claim 1 or claim 2, in which the steps of (b) fusing a pre-formed completion section comprising a thermoplastics material to a portion of the profile and (c) clamping the completion section and the portion of the profile to which is to be attached to form a substantially continuous joint between them are carried out together in a single step.

4. A method in accordance with any preceding claim, in which the material of the completion section and the material of the profile are fused directly to each other.

5. A method in accordance with any one of claim 1 to 3, in which the material of the completion section and the material of the profile are fused together via an additional, intermediary fusion portion (51,61) comprising a thermoplastics material to which each is fused.

6. A method in accordance with any preceding claim, in which portions to be fused are pre-heated using a heated gas or vapour.

7. A method in accordance with any preceding claim, in which prior to the step of (b) fusing the pre-formed completion section comprising a thermoplastics material to the portion of the profile, the profile is prepared by cutting the profile subsequent to it being secured to the glazing to form an interface adapted to be attached to the completion section and removing any excess part of the profile so as to leave the interface ready to receive the completion section.

8. A method in accordance with any preceding claim, in which at least part of the attachment between the completion section and the profile is chamfered.

9. A method in accordance with any preceding claim, in which the completion section forms a corner section of the glazing panel.

10. A method in accordance with any preceding claim, in which both the profile and the completion section comprise a lip adapted to project beyond the periphery of the glazing, and in which the said lips are fused together to produce a substantially continuous joint between them.

11. A method in accordance with any preceding claim, in which the profile is formed by extrusion.

12. A method in accordance with any preceding claim, in which the completion section is formed between a pair of shaped moulds.

13. Use of a method in accordance with any preceding claim to form a sharp corner in a profile of an automotive glazing panel.

14. An automotive glazing panel produced by a method in accordance with any preceding claim.

15. A glazing panel comprising a thermoplastics profile (13,14,15) secured to at least part of a peripheral edge of the glazing panel and **characterised by** a separately formed thermoplastics completion section (16,17) fused to the profile to form a substantially continuous joint between them.

16. A glazing panel in accordance with claim 15, in which the profile and the completion section are fused directly to each other.

17. A glazing panel in accordance with claim 15, in which the profile and the completion section are fused together via an additional, intermediary fusion portion comprising a thermoplastics material to which each is fused.

18. A glazing panel in accordance with any one of claims 15 to 17, in which the completion section forms a corner section of the glazing panel.

19. A glazing panel in accordance with any one of claims 15 to 18, in which both the profile and the completion section comprise a lip adapted to project beyond the periphery of the glazing, and in which the said lips are fused together to produce a substantially continuous joint between them.

20. A glazing panel in accordance with any one of claims 15 to 19, in which the glazing panel is an automotive glazing panel.

## Patentansprüche

1. Verfahren zur Herstellung einer Glasplatte bzw. -scheibe, welche ein Profil umfaßt, das an einem Abschnitt von wenigstens einer Kante einer Verglasung (11) gesichert wird, umfassend die Schritte:
a) Sichern eines Profils (13, 14, 15), umfassend ein thermoplastisches bzw. Thermoplastik-Material an wenigstens einem Teil einer Umfangskante der Verglasung; **gekennzeichnet durch**:
b) Schmelzen eines vorgeformten Vervollständigungsabschnitts (16, 17), umfassend ein thermoplastisches Material an einem Abschnitt des Profils, um eine im wesentlichen kontinuierliche Verbindung zwischen diesen auszubilden.

2. Verfahren nach Anspruch 1, umfassend:
c) Zusammenklammern bzw. Klemmen des Vervollständigungsabschnitts und des Abschnitts des Profils, an welchem er festzulegen ist.

3. Verfahren nach Anspruch 1 oder Anspruch 2, in welchem die Schritte aus (b) Schmelzen eines vorgeformten Vervollständigungsabschnitts, umfassend ein thermoplastisches Material, an einem Abschnitt des Profils und (c) Klemmen des Vervollständigungsabschnitts und des Abschnitts des Profils, an welchem er festzulegen ist, um eine im wesentlichen kontinuierliche Verbindung zwischen diesen auszubilden, gemeinsam in einem einzigen Schritt ausgeführt werden.

4. Verfahren nach einem der vorhergehenden Ansprüche, in welchem das Material des Vervollständigungsabschnitts und das Material des Profils direkt miteinander verschmolzen werden.

5. Verfahren nach einem der Ansprüche 1 bis 3, in welchem das Material des Vervollständigungsabschnitts und das Material des Profils über einen zusätzlichen zwischenliegenden Verschmelzungsabschnitt (51, 61), umfassend ein thermoplastisches Material verschmolzen werden, an welches jedes verschmolzen wird.

6. Verfahren nach einem der vorhergehenden Ansprüche, in welchem Abschnitte, die zu verschmelzen sind, unter Verwendung eines erhitzten bzw. erwärmten Gases oder von Dampf vorerhitzt werden.

7. Verfahren nach einem der vorhergehenden Ansprüche, in welchem vor dem Schritt von (b) Schmelzen des vorgeformten Vervollständigungsabschnitts, umfassend ein thermoplastisches Material, mit dem Abschnitt des Profils, das Profil durch ein Schneiden des Profils, nachfolgend zu seinem Sichern an der Verglasung, um eine Grenzfläche auszubilden, die adaptiert ist, um an dem Vervollständigungsabschnitt festgelegt zu werden, und ein Entfernen von jedem überschüssigen Teil des Profils hergestellt wird, um die Grenzfläche zum Aufnehmen des Vervollständigungsabschnitts zu belassen.

8. Verfahren nach einem der vorhergehenden Ansprüche, in welchem wenigstens ein Teil der Befestigung zwischen dem Vervollständigungsabschnitt und dem Profil abgeschrägt wird.

9. Verfahren nach einem der vorhergehenden Ansprüche, in welchem der Vervollständigungsabschnitt einen Eckabschnitt der Verglasungsplatte ausbildet.

10. Verfahren nach einem der vorhergehenden Ansprüche, in welchem sowohl das Profil als auch der Vervollständigungsabschnitt eine Lippe umfassen, die adaptiert ist, um über den Umfang der Verglasung vorzuragen, und in welchem die Lippen miteinander verschmolzen werden, um eine im wesentlichen kontinuierliche Verbindung zwischen diesen auszubilden.

11. Verfahren nach einem der vorhergehenden Ansprüche, in welchem das Profil durch Extrusion gebildet wird.

12. Verfahren nach einem der vorhergehenden Ansprüche, in welchem der Vervollständigungsabschnitt zwischen einem Paar von geformten Formen ausgebildet wird.

13. Verwendung eines Verfahrens nach einem der vorhergehenden Ansprüche, um eine scharfe Ecke in einem Profil einer Autoverglasungsplatte bzw. - glasscheibe auszubilden.

14. Autoglasscheibe, die durch ein Verfahren nach einem der vorhergehenden Ansprüche hergestellt ist.

15. Glasscheibe, umfassend ein thermoplastisches bzw. Thermoplastik-Profil (13, 14, 15), das an wenigstens einem Teil einer Umfangskante der Glasscheibe festgelegt ist, und **gekennzeichnet durch** einen gesondert ausgebildeten thermoplastischen bzw. Thermoplastik-Vervollständigungsabschnitt (16, 17), der an das Profil geschmolzen ist, um eine im wesentlichen kontinuierliche Verbindung zwischen diesen auszubilden.

16. Glasscheibe nach Anspruch 15, in welchem das Profil und der Vervollständigungsabschnitt direkt miteinander verbunden bzw. verschmolzen sind.

17. Glasscheibe nach Anspruch 15, in welchem das Profil und der Vervollständigungsabschnitt miteinander über einen zusätzlichen zwischenliegenden Verschmelzungsabschnitt verschmolzen sind, umfassend ein thermoplastisches Material, mit welchem jeder verschmolzen ist.

18. Glasscheibe nach einem der Ansprüche 15 bis 17, in welcher der Vervollständigungsabschnitt einen Eckabschnitt der Glasscheibe ausbildet.

19. Glasscheibe nach einem der Ansprüche 15 bis 18, in welcher sowohl das Profil als auch der Vervollständigungsabschnitt eine Lippe umfassen, die adaptiert ist, um über den Umfang der Verglasung vorzuragen, und in welcher die Lippen miteinander verschmolzen sind, um eine im wesentlichen kontinuierliche Verbindung zwischen diesen auszubilden.

20. Glasscheibe nach einem der Ansprüche 15 bis 19, in welcher die Glasscheibe eine Autoglasscheibe ist.

## Revendications

1. Une méthode de fabrication d'un panneau de vitrage qui comprend un profilé attaché à une portion d'au moins un bord d'un vitrage (11) comprenant les étapes suivantes :
a) attachement d'un profilé (13,14,15) comprenant un matériau thermoplastique sur au moins une partie du bord périphérique du vitrage ; **caractérisé par** :
b) fusion d'une section de finition préformée (16,17) comprenant un matériau thermoplastique sur une portion du profilé afin de former un joint substantiellement continu entre eux.

2. Une méthode conformément à la revendication 1, comprenant :
c) le pinçage de la section de finition et de la portion du profilé à laquelle elle doit être attachée.

3. Une méthode conformément à la revendication 1 ou la revendication 2, dans laquelle les étapes (b) d'attachement d'une section de finition préformée comprenant un matériau thermoplastique à une portion du profilé et (c) de pinçage de la section de finition et de la portion du profilé à laquelle elle doit être attachée afin de former un joint substantiellement continu entre elles, sont exécutées ensemble dans une même étape.

4. Une méthode conformément à l'une quelconque des revendications précédentes, dans laquelle le matériau de la section de finition et le matériau du profilé sont soudés directement l'un à l'autre.

5. Une méthode conformément à l'une quelconque des revendication de 1 à 3, dans laquelle le matériau de la section de finition et le matériau du profilé sont soudés l'un à l'autre au moyen d'une portion de fusion intermédiaire additionnelle (51,61) comprenant un matériau thermoplastique avec lequel chacun d'eux est soudé.

6. Une méthode conformément à l'une quelconque des revendications précédentes, dans laquelle des portions destinées à être soudées sont préchauffées au moyen d'un gaz ou d'une vapeur chauffés.

7. Une méthode conformément à l'une quelconque des revendications précédentes, dans laquelle, avant l'étape (b) de fusion d'une section de finition préformée comprenant un matériau thermoplastique à la portion du profilé, le profilé est préparé en coupant le profilé après qu'il a été attaché au vitrage afin de former une interface adaptée à attacher à la section de finition et en enlevant toute partie excédentaire du profilé de manière à ce que l'interface soit prête à recevoir la section de finition.

8. Une méthode conformément à l'une quelconque des revendications précédentes, dans laquelle au moins une partie de l'attachement entre la section de finition et le profilé est biseautée.

9. Une méthode conformément à l'une quelconque des revendications précédentes, dans laquelle la section de finition forme une section du coin du panneau de vitrage.

10. Une méthode conformément à l'une quelconque des revendications précédentes, dans laquelle à la fois le profilé et la section de finition comprennent une lèvre adaptée pour faire saillie au-delà de la périphérie du vitrage, et dans laquelle lesdites lèvres sont soudées l'une à l'autre de manière à produire un joint substantiellement continu entre elles.

11. Une méthode conformément à l'une quelconque des revendications précédentes, dans laquelle le profilé est formé par extrusion.

12. Une méthode conformément à l'une quelconque des revendications précédentes, dans laquelle la section de finition est formée entre une paire de moules préformés.

13. Utilisation d'une méthode conformément à l'une quelconque des revendications précédentes afin de former un angle vif dans un profilé d'un panneau de vitrage automobile.

14. Un panneau de vitrage automobile produit par une méthode conformément à l'une quelconque des revendications précédentes.

15. Un panneau de vitrage comprenant un profilé thermoplastique (13,14,15) attaché à au moins une partie d'un bord périphérique du panneau de vitrage et **caractérisé par** une section de finition thermoplastique formée séparément (16,17) soudée au profilé afin de former un joint substantiellement continu entre eux.

16. Un panneau de vitrage conformément à la revendication 15, dans lequel le profilé et la section de finition sont fusionnés directement l'un à l'autre.

17. Un panneau de vitrage conformément à la revendication 15, dans lequel le profilé et la section de finition sont fusionnés l'un à l'autre au moyen d'une portion de fusion intermédiaire additionnelle comprenant un matériau thermoplastique auquel chacun est soudé.

18. Un panneau de vitrage conformément à l'une quelconque des revendications de 15 à 17, dans lequel la section de finition forme une section du coin du panneau de vitrage.

19. Un panneau de vitrage conformément à l'une quelconque des revendications de 15 à 18, dans lequel à la fois le profilé et la section de finition comprennent une lèvre adaptée pour faire saillie au-delà de la périphérie du vitrage, et dans laquelle lesdites lèvres sont soudées l'une à l'autre de manière à produire un joint substantiellement continu entre elles.

20. Un panneau de vitrage conformément à l'une quelconque des revendications de 15 à 19, dans lequel le panneau de vitrage est un panneau de vitrage automobile.
